# EUROPÄISCHE PATENTSCHRIFT

(11) **EP 1 903 412 B1**
(45) Veröffentlichungstag und Bekanntmachung des Hinweises auf die Patenterteilung: **02.11.2011**
(21) Anmeldenummer: 06019937.9
(22) Anmeldetag: 22.09.2006
(51) Int. Cl.: G05B 19/418, G05B 19/042, H04Q 9/00

(54) **Verfahren zur Freigabe der Bedienung von Automatisierungskomponenten einer technischen Anlage über ein mobiles Bedien- und Beobachtungsgerät**
Method for releasing the operation of automation components of a technical installation via a mobile control and visualisation apparatus
Procédé destiné à autoriser l'utilisation de composants d'automatisation d'une installation technique à l'aide d'un appareil d'observation et de commande mobile

(43) Veröffentlichungstag der Anmeldung: 26.03.2008
(73) Patentinhaber: SIEMENS AKTIENGESELLSCHAFT, 80333 München (DE)
(72) Erfinder: Gila, Janos, Dr., 2340 Mödling (AT); Konrad, Wolfgang, Dr., 2340 Mödling (AT); Rieger, Gottfried, 90766 Fürth (DE); Sinn, Ulrich, 91056 Erlangen (DE)

(56) Entgegenhaltungen:
- EP-A- 1 429 217
- EP-A- 1 672 445
- DE-A1- 10 110 776
- DE-A1- 10 129 189
- US-A- 6 167 464

## Beschreibung

Verfahren zur Freigabe der Bedienung von Automatisierungskomponenten einer technischen Anlage über ein mobiles Bedien-und Beobachtungsgerät

Die Erfindung betrifft ein Verfahren zur Freigabe der Bedienung von Automatisierungskomponenten einer technischen Anlage über ein mobiles Bedien- und Beobachtungsgerät, ein Bedien-und Beobachtungsgerät, Automatisierungskomponenten und ein Computerprogrammprodukt zur Durchführung des erfindungsgemäßen Verfahrens.

Technische Anlagen sind alle Arten von technischen Geräten und Systemen sowohl in Einzelanordnung als auch in datentechnischer Vernetzung z. B. über einen Feldbus. Bei industriellen Anwendungen fallen darunter einzelne Betriebsmittel, z. B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z. B. eine chemische Anlage oder Fertigungsstraße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, das heißt speicherprogrammierbare Steuerungen (SPS), auch als PLC-Programmable Logic Controller bezeichnet. Zur Entlastung dieser Steuerungen weisen Automatisierungen weiter spezielle Geräte auf, welche eine Schnittstelle für Bedienpersonal bilden. Diese werden als Geräte zum Bedienen und Beobachten, abgekürzt B+B, als BETE-Geräte oder auch als HMI-Geräte (Human Machine Interface-Geräte) bezeichnet.

Der Begriff HMI-Gerät ist ein Oberbegriff und umfasst alle zu dieser Gruppe von Geräten gehörigen Komponenten. Als ein Beispiel sollen Operator Panels, auch als Bedien-Panels (Abkürzung: OP) bezeichnet, genannt werden. Diese können stationär oder mobil ausgeführt sein. HMI-Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Acquisition" (SCADA) bezeichnet. Hierzu ist das HMI-Gerät in der Regel hardware-mäßig speziell aufgebaut, das heißt es verfügt z. B. über einen Touch-Screen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert werden. So können über HMI-Geräte z. B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Vielfach sind die HMI-Geräte z. B. in Form von Terminals als stationäre Komponenten in ein Automatisierungssystem fest integriert. Derartige Terminals sind dann in der Regel fest über Kabelverbindungen mit dem Automatisierungssystem verbunden. Sind diese Terminals als Handheld-Geräte ausgeführt, so ist deren Aktionsradius durch ein Anschlusskabel beschränkt. Hierdurch ist es in vielen Fällen gewährleistet, dass eine Bedienperson sicherheitsrelevante Bedienungen nur in unmittelbarer Nähe der technischen Anlage oder zumindest unter Einhaltung eines ausreichenden Sichtkontaktes vornehmen kann.

Anders ist dagegen die Situation, wenn ein HMI-Gerät in Form eines mobilen Bedien- und Beobachtungsgeräts ausgebildet ist. Ein solches mobiles Bedien- und Beobachtungsgerät kann z. B. über eine Funkstrecke mit dem Automatisierungssystem bzw. den Automatisierungskomponenten verbunden sein, die eine große Reichweite aufweist. So ist es in einem solchen Fall nicht ausgeschlossen, dass sich eine Bedienperson, die ein mobiles Bedien- und Beobachtungsgerät benutzt, sich so weit von einer dazugehörigen technischen Anlage entfernt, dass sicherheitsrelevante Bedienungen aus einer an sich unzulässigen Entfernung vorgenommen werden. In einem solchen Fall wäre dann die Personensicherheit nicht gewährleistet.

Zur Vermeidung einer Steuerung des Automatisierungssystems durch das Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Hierzu kann das HMI-System mit Auswertemitteln zur Verwaltung eines aktiven Bedienbereichs um die technische Anlage herum ausgestaltet werden. Die Lokalisierungsmittel werten den Abstand des mobilen Bedien- und Beobachtungsgeräts von der technischen Anlage aus, um detektieren zu können, ob sich das mobile Bedien- und Beobachtungsgerät innerhalb des aktiven Bedienbereichs befindet.

Die hierfür erforderliche Abstandsmessung kann dabei z. B. mit Hilfe einer berührungslosen Datenübertragungsstrecke erfolgen, welche die Automatisierungskomponenten und das mobile Bedien- und Beobachtungsgerät datentechnisch miteinander verbinden.

Zur Lokalisierung der Abstandsbestimmung kann das mobile Bedien- und Beobachtungsgerät mit Sende- und Empfangsmitteln ausgestattet werden, die ein Abfragesignal aussenden und aus einem daraus resultierenden empfangenen Funkantwortsignal eine Bestimmung des Abstandes oder der absoluten Position des mobilen Bedien- und Beobachtungsgeräts ermöglichen.

Abfrage- und Funkantwortsignale sind typischerweise Radarsignale. Das Funkantwortsignal kann z. B. durch eine Reflektion des Abfragesignals an einem reflektierenden Objekt entstehen. Reflektierende Objekte sind z. B. Transpondervorrichtungen, die ein moduliertes Funkantwortsignal als Antwort auf ein empfangenes Abfragesignal erzeugen und aussenden. Eine derartige Transpondervorrichtung kann z. B. an der technischen Anlage angebracht sein, wodurch eine Abstandsbestimmung zwischen mobilem Bedien- und Beobachtungsgerät und der technischen Anlage mit Hilfe empfangener Funkantwortsignale ermittelt werden kann.

Die DE 103 43 251 beschreibt ein HMI-System mit einer manuellen Freigabe oder Sperre sicherheitsrelevanter Bedienungen der technischen Anlage und Mittel zur Lokalisierung des mobilen Bedien- und Beobachtungsgeräts. Auswertemittel im Bedien- und Beobachtungsgerät aktivieren die Automatisierungskomponenten für sicherheitsrelevante Bedienungen der technischen Anlage über das Bedien- und Beobachtungsgerät nur dann, wenn die manuelle Einrichtung freigegeben ist und die Lokalisierungsmittel detektieren, dass sich das mobile Bedien- und Beobachtungsgerät innerhalb des aktiven Bedienbereichs befindet.

Die EP 1 672 380 beschreibt ein HMI-System mit integralem Sende- und Empfängerkonzept. Das Bedien- und Beobachtungssystem weist Sende- und Empfangsmittel zur Lokalisierung des mobilen Bedien- und Beobachtungsgeräts auf. Durch die Lokalisierung kann ein aktiver Bedienbereich mit Hilfe von Auswertemitteln verwaltet werden. Die Auswertemittel aktivieren die Automatisierungskomponenten für sicherheitsrelevante Bedienungen, wenn sich das Bedien- und Beobachtungsgerät innerhalb des aktiven Bereichs befindet. Die Sende und Empfangsmittel sind zum gleichzeitigen Senden und Empfangen von Funksignalen ausgebildet und sind jeweils für die Transpondervorrichtung oder das mobile Bedien- und Beobachtungsgerät in einem einzigen Antennenmodul integriert.

Auch die EP 1 672 445 A beschreibt ein HMI-System zur Lokalisierung eines mobilen Bedien- und Beobachtungsgerätes. Ebenfalls werden hier Transpondervorrichtungen eingesetzt.

Die DE 101 29 189 A1 bezieht sich auf eine mobile Bedien- und Beobachtungseinheit, welche zwar über eine drahtlose Verbindung mit einer technischen Anlage kommunizieren kann, bei welcher man aber zur Bedienung der entsprechenden Anlage einen Code angeben muss.

In DE 101 10 776 A1 wird eine Bedien- und Beobachtungseinrichtung offenbart, welche mit Hilfe von Richtantennen eine Sendereichweite bzw. eine Empfangsempfindlichkeit derart grenzt, dass die Bedien- und Beobachtungseinrichtung nur in einem örtlich zugehörigen Funktions- bzw. Wirkungsbereich eine Verbindung mit der technischen Anlage aufbauen kann.

Der Erfindung liegt die Aufgabe zugrunde, ein gegenüber dem Stand der Technik verbessertes Verfahren zur Freigabe der Bedienung von Automatisierungskomponenten einer technischen Anlage über ein mobiles Bedien- und Beobachtungsgerät anzugeben. Ferner liegt der Erfindung die Aufgabe zugrunde, ein verbessertes mobiles Bedien- und Beobachtungsgerät, eine verbesserte Automatisierungskomponente, sowie ein verbessertes HMI-System anzugeben.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Erfindungsgemäß wird ein Verfahren zur Freigabe der Bedienung von Automatisierungskomponenten einer technischen Anlage über ein mobiles Bedien- und Beobachtungsgerät geschaffen. In einem ersten Schritt empfängt das Bedien- und Beobachtungsgerät eine erste Kennung einer ersten Transpondervorrichtung, wobei die erste Transpondervorrichtung an der technischen Anlage angebracht ist, wobei die erste Transpondervorrichtung durch die Automatisierungskomponenten aktiviert worden ist und wobei die erste Kennung über eine drahtlose Kommunikationsverbindung von den Automatisierungskomponenten an das mobile Bedien- und Beobachtungsgerät übermittelt worden ist. In einem weiteren Schritt erfolgt die Deaktivierung der Kommunikationsverbindung zwischen dem Bedien- und Beobachtungsgerät und den Automatisierungskomponenten. Das mobile Bedien- und Beobachtungsgerät sendet ein Trägersignal und empfängt im Anschluss das von der ersten Transpondervorrichtung modulierte Trägersignal. Aus dem modulierten Trägersignal wird dann ein erster Abstand zwischen dem Bedien- und Beobachtungsgerät und der ersten Transpondervorrichtung ermittelt. Ferner wird eine erste funkermittelte Kennung der ersten Transpondervorrichtung aus dem modulierten Trägersignal ermittelt. Im Anschluss an den Empfang des modulierten Trägersignals erfolgt eine Reaktivierung der Kommunikationsverbindung zwischen dem Bedien-und Beobachtungsgerät und den Automatisierungskomponenten. Falls der erste Abstand kleiner ist als ein vorgegebener erster Abstand und falls die funkermittelte erste Kennung der ersten Kennung entspricht, erfolgt die Freigabe der Bedienung der Automatisierungskomponenten. Anderenfalls wird die Bedienung der Automatisierungskomponenten über das mobile Bedien-und Beobachtungsmodul gesperrt.

An der technischen Anlage können mehrere Transpondervorrichtungen angebracht sein, die jeweils über die Automatisierungskomponenten aktivierbar bzw. deaktivierbar sind. Das Bedien- und Beobachtungsgerät empfängt eine erste Kennung, die einer ersten Transpondervorrichtung zugeordnet ist, welche zuvor von den Automatisierungskomponenten ausgewählt worden ist. Nach Übermittlung dieser ersten Kennung an das mobile Bedien- und Beobachtungsgerät wird die erste Transpondervorrichtung durch die Automatisierungskomponenten aktiviert, wobei die anderen Transpondervorrichtungen deaktiviert bleiben. Sendet nun das Bedien- und Beobachtungsgerät das Trägersignal, so antwortet nur die erste Transpondervorrichtung, da nur diese aktiviert worden ist. Die weiteren Transpondervorrichtungen modulieren das Trägersignal nicht, da diese nicht aktiviert sind. Die Aktivierung der Transpondervorrichtung durch die Automatisierungskomponenten hat den Vorteil, dass selektiv eine Transpondervorrichtung aus mehreren Transpondervorrichtungen, die an der technischen Anlage angebracht sind, ausgewählt werden kann, zu der dann das Bedien- und Beobachtungsgerät seinen Abstand ermittelt. Die anderen Transpondervorrichtungen stören dabei die Ermittlung des Abstandes nicht.

Ferner wird durch das Bedien- und Beobachtungsgerät, durch das Auslesen der funkermittelten Kennung, die in kodierter Form auf der Transpondervorrichtung vorgegeben ist, und durch Vergleich dieser funkermittelten Kennung mit der der Transpondervorrichtung zugeordneten Kennung, die zuvor von den Automatisierungskomponenten an das mobile Bedien- und Beobachtungsgerät übermittelt worden ist, sichergestellt, dass nicht etwa ein Transponder einer anderen technischen Anlage, die sich in ausreichender Nähe zu der technischen Anlage befindet, und an der ein Transponder aktiv ist, detektiert worden ist.

Vorteilhaft ist weiterhin, dass die Kommunikationsverbindung zwischen dem Bedien- und Beobachtungsgerät und den Automatisierungskomponenten während dem Senden des Trägersignals und dem Empfang des von der ersten Transpondervorrichtung modulierten Trägersignals deaktiviert ist. Die Kommunikationsverbindung ist z. B. eine WLAN-Verbindung (IEEE 802.11) mit Frequenzen im Bereich von 2,4 GHz bzw. 5,7 GHz oder eine Bluetooth-Verbindung (IEEE 802.15.1) mit Frequenzen im Bereich zwischen 2,402 und 2,480 GHz. Bei dem Trägersignal als Abfragesignal bzw. bei dem modulierten Trägersignal als Funkantwortsignal der ersten Transpondervorrichtung handelt es sich typischerweise um Radarsignale, die im selben Frequenzbereich liegen. Die Deaktivierung der Kommunikationsverbindung hat somit den Vorteil, dass sich die Kommunikationsverbindung nicht störend auf die Ermittlung des Abstandes bzw. auf die Ermittlung der funkermittelten Kennung mittels des modulierten Trägersignals auswirkt.

Nach einer Ausführungsform der Erfindung weist das erfindungsgemäße Verfahren ferner den Schritt der Übermittlung einer ersten Nachricht an die Automatisierungskomponenten nach Aktivierung des Bedien- und Beobachtungsgeräts durch einen Benutzer auf, wobei mittels der ersten Nachricht um Bedienung der Automatisierungskomponenten durch den Benutzer angefragt wird. In einem weiteren Schritt erfolgt der Empfang einer Bestätigungsnachricht von den Automatisierungskomponenten, wobei die erste Kennung in der ersten Bestätigungsnachricht oder in einer weiteren Nachricht im Anschluss an die Bestätigungsnachricht übermittelt wird. Das Bedien- und Beobachtungsgerät sendet ferner eine zweite Nachricht an die Automatisierungskomponenten zur Bestätigung des Empfangs der Bestätigungsnachricht, wobei die erste Transpondervorrichtung nach Empfang der zweiten Nachricht von den Automatisierungskomponenten aktiviert wird. Ferner werden nach Empfang der zweiten Nachricht die Automatisierungskomponenten ausschließlich dem Bedien- und Beobachtungsgerät zugewiesen, das heißt andere Bedien- und Beobachtungsgeräte können in dem Zeitraum, in dem die Automatisierungskomponenten dem Bedien- und Beobachtungsgerät zugewiesen sind, nicht mit den Automatisierungskomponenten kommunizieren bzw. die Automatisierungskomponenten nicht bedienen. Die Zuweisung der Automatisierungskomponenten an das Bedien- und Beobachtungsgerät hat den Vorteil, dass ausschließlich ein einziges Bedien- und Beobachtungsgerät jeweils mit den Automatisierungskomponenten über eine Kommunikationsverbindung kommuniziert. Dies hat den Vorteil, dass keine weitere Kommunikation eines anderen Bedien- und Beobachtungsgeräts stattfindet und sich somit nicht störend auf die Ermittlung des ersten Abstandes bzw. der ersten funkermittelten Kennung der Transpondervorrichtung auswirken kann.

Nach einer Ausführungsform der Erfindung werden der erste Abstand und die erste funkermittelte Kennung in regelmäßigen oder unregelmäßigen Zeitabständen bestimmt, wobei während der Abstandsmessung die Kommunikationsverbindung zwischen dem Bedien- und Beobachtungsgerät und der Automatisierungskomponenten deaktiviert ist. Das hat den Vorteil, dass bereits der erster Abstandswert und die erste Kennung bekannt sind, wenn der Benutzer eine sicherheitsrelevante Bedienung an den Automatisierungskomponenten über das Bedien- und Beobachtungsgerät ausführen will.

Die ermittelten Abstände können ferner auf dem Bedien- und Beobachtungsgerät gespeichert werden. Sollte eine aktuell durchgeführte Abstandsmessung fehlschlagen, so kann z.B. der zuletzt ermittelte erste Abstand herangezogen werden, um diesen dann mit dem vorgegebenen ersten Abstand zu vergleichen und gegebenenfalls die Bedienung der Automatisierungskomponenten für den Benutzer freizugeben.

Nach einer Ausführungsform der Erfindung weist das Trägersignal eine erste Sequenz und eine zweite Sequenz auf, wobei die erste Sequenz zur Ermittlung des Abstands verwendet wird und wobei die zweite Sequenz zur Ermittlung der ersten funkermittelten Kennung verwendet wird. Die erste Sequenz ist dabei ist so ausgebildet, dass damit der erste Abstand zu der Transpondervorrichtung mittels des nach dem Stand der Technik bekannten Frequency Modulated Continuous Wave (FMCW)-Verfahrens ermittelt werden kann. Das FMCW-Verfahren entspricht dabei einem frequenzmodulierten Dauerstrich-Radarverfahren, wobei kontinuierliche Radarstrahlung ausgesandt wird und wobei die Frequenz der Radarstrahlung einer periodischen Modulation unterliegt. Da sich die Sendefrequenz des Trägersignals in der ersten Sequenz kontinuierlich ändert, weisen ausgesendetes und vom Objekt reflektiertes Radarsignal eine Frequenzverschiebung auf, die einem Laufzeitunterschied entspricht. Dieser Laufzeitunterschied spiegelt den zweifachen Abstand zwischen dem Bedien- und Beobachtungsgerät und dem reflektierenden Objekt wider. Zur Bestimmung einer Entfernung werden die empfangenen Signale der ersten Sequenz typischerweise einer spektralen Analyse unterzogen. Erstellt man ein Leistungsspektrum über die Frequenzverschiebung des empfangenen Signals bezogen auf die Sendefrequenz, so geben Leistungsspitzen des Spektrums direkt Aufschluss über die Entfernung zu der reflektierenden Transpondervorrichtung.

Nach einer Ausführungsform der Erfindung wird eine erste kodierte Kennung auf die zweite Sequenz durch die Transpondervorrichtung aufmoduliert, wobei die erste funkermittelte Kennung aus der ersten kodierten Kennung ermittelt wird. Die Transpondervorrichtung weist eine erste kodierte Kennung auf, die mittels des Trägersignals, bzw. mittels der zweiten Sequenz des Trägersignals, ausgelesen wird und aus der die funkermittelte Kennung ermittelt wird. Die erste kodierte Kennung kann dabei mittels Golay-Codes auf der Transpondervorrichtung kodiert sein. Diese ermöglichen, dass im Bedien-und Beobachtungsgerät eine Korrelationsdetektion anstatt einer herkömmlichen Decodierung eingesetzt werden kann. Durch die Verwendung einer Korrelationsdetektion können z. B. Signale, die gleichzeitig von zwei unterschiedlichen Transpondervorrichtungen empfangen werden, auseinander selektiert werden, auch wenn diese einen geringen Pegelunterschied aufweisen. Auf diese Weise wird eine Störung der Detektion der funkermittelten Kennung durch eine andere Transpondervorrichtung, die an einer anderen technischen Anlage nahe bei der technischen Anlage angebracht ist, vermieden bzw. der Einfluss der Störung wird umgangen, indem die von der Transpondervorrichtung und der anderen Transpondervorrichtung empfangenen Signale aufgrund der Korrelationsdetektion auseinander selektiert werden können, auch wenn der Pegelunterschied der beiden Signale sehr gering ist.

Nach einer weiteren Ausführungsform der Erfindung liegt der Frequenzbereich des vom Transponder aufmodulierten Signals innerhalb eines vorgegebenen Frequenzbandes, wobei die Bandbreite des Frequenzbereichs wesentlich kleiner ist als die Bandbreite des Frequenzbandes, der vom Bedien- und Beobachtungsgerät verwendet werden kann. Die Bedien- und Beobachtungsgeräte verwenden Trägersignale innerhalb eines vorgegebenen Frequenzbandes. Es kann nun sein, dass ein erstes Bedien- und Beobachtungsgerät die Freigabe der Bedienungen von ihm zugeordneten Automatisierungskomponenten einer technischen Anlage erfragt, wobei gleichzeitig ein zweites Bedien-und Beobachtungsgerät die Freigabe der Bedienung von anderen, dem zweiten Bedien- und Beobachtungsgerät zugeordneten zweiten Automatisierungskomponenten erfragt, wobei die zweiten Automatisierungskomponenten und die ersten Automatisierungskomponenten sich in unmittelbarer Nachbarschaft zueinander befinden und jeweils zur Steuerung von verschiedenen, benachbarten Anlagen eingesetzt werden. Durch die Begrenzung des Frequenzbereichs des vom Transponder aufmodulierten Signals innerhalb einer Bandbreite, die wesentlich kleiner ist als die Bandbreite des Frequenzbandes, die das erste und das zweite Bedien- und Beobachtungsgerät verwenden, kann sichergestellt werden, dass beide Bedien- und Beobachtungsgeräte mehr oder weniger gleichzeitig die Abstandsbestimmung bzw. die Bestimmung der funkermittelten Kennung betreffend entsprechender Transpondervorrichtungen mittels Senden und Empfangen des Trägersignals durchführen können, ohne dass sich diese Bedien- und Beobachtungsgeräte gegenseitig stören.

Nach einer weiteren Ausführungsform der Erfindung wird der erste Abstand mit dem in der vorhergehenden Abstandsmessung ermittelten ersten Abstand verglichen. Die Freigabe der Bedienung erfolgt nur, falls der Betrag der Differenz zwischen dem ersten Abstand und dem zuvor ermittelten ersten Abstand kleiner ist als ein vorgegebener zweiter Abstand.

Nach einer Ausführungsform der Erfindung werden weitere Abstände und weitere Kennungen betreffend mindestens eine weitere Transpondervorrichtung ermittelt. Die mindestens eine weitere Transpondervorrichtung ist an der technischen Anlage angebracht und durch die Automatisierungskomponenten nach Übermittlung der zur mindestens einen weiteren Transpondervorrichtung gehörenden weiteren Kennung aktiviert worden, wobei für jede der mindestens einen weiteren Transpondervorrichtung ein Abstand und eine funkermittelte Kennung ermittelt werden, und wobei die Freigabe der Bedienung der Automatisierungskomponenten erfolgt, wenn der Abstand des Bedien- und Beobachtungsgeräts zumindest zu einer der Transpondervorrichtungen kleiner ist als der vorgegebene erste Abstand und wenn die funkermittelte Kennung der übermittelten Kennung von zumindest einer Transpondervorrichtung der entsprechenden von den Automatisierungskomponenten übermittelten Kennung entspricht. Praktischerweise wird der erste Abstand und die funkermittelte Kennung für eine erste Transpondervorrichtung ermittelt. Sollten dabei keine Komplikationen auftreten, so erfolgt die Freigabe auf der Basis der funkermittelten Kennung und des ersten Abstands. Sollte sich z.B. der erste Abstand nicht ermitteln lassen, so wird das Verfahren, für eine weitere zweite Transpondervorrichtung wiederholt und eine Freigabe erteilt, falls der Abstand zwischen der zweiten Transpondervorrichtung und dem Bedien- und Beobachtungsgerät kleiner ist als der vorgegebene maximal zulässige Abstand und falls die funkermittelte Kennung der zweiten Transpondervorrichtung mit der von den Automatisierungskomponenten übermittelten Kennung übereinstimmt. Sollten auch hier Komplikationen auftreten, z.B. in der Form, dass sich der zweite Abstand nicht bestimmen lässt, so wird das Verfahren betreffend eine weitere Transpondervorrichtung wiederholt, solange bis die Freigabe erteilt wird. Falls nur zwei Transpondervorrichtungen an der technischen Anlage angebracht sind, wir das Verfahren eben wieder in Bezug auf die erste Transpondervorrichtung wiederholt.

Nach einer Ausführungsform der Erfindung wird dem Benutzer signalisiert, dass dieser sich in einem zu großen Abstand von den Automatisierungskomponenten befindet, falls der erste Abstand größer ist als der erste vorgegebene Abstand.

In einem anderen Aspekt betrifft die Erfindung ein Computerprogrammprodukt mit computerausführbaren Instruktionen, wobei die Instruktionen so angepasst sind, dass erfindungsgemäße Schritte des Verfahrens mittels der Instruktionen ausführbar sind.

In einem weiteren Aspekt betrifft die Erfindung ein Bedien-und Beobachtungsgerät zur Bedienung von Automatisierungskomponenten einer technischen Anlage. Die Bedien- und Beobachtungskomponente hat Mittel zum Empfang einer ersten Kennung einer ersten Transpondervorrichtung durch das mobile Bedien-und Beobachtungsgerät, wobei die erste Transpondervorrichtung an der technischen Anlage angebracht ist, wobei die erste Transpondervorrichtung durch die Automatisierungskomponenten aktivierbar ist und wobei die erste Kennung über eine drahtlose Kommunikationsverbindung von der Automatisierungskomponenten an das mobile Bedien- und Beobachtungsgerät übermittelt worden ist. Das Bedien- und Beobachtungsgerät weist ferner Mittel zur Deaktivierung der Kommunikationsverbindung zwischen dem Bedien- und Beobachtungsgerät und den Automatisierungskomponenten auf. Ferner umfasst das Bedien- und Beobachtungsgerät Mittel zum Senden eines Trägersignals und zum (gleichzeitigen) Empfang des von der ersten Transpondervorrichtung modulierten Trägersignals. Ferner gibt es Mittel zur Ermittlung eines ersten Abstandes zwischen dem Bedien- und Beobachtungsgerät und der ersten Transpondervorrichtung und zur Ermittlung einer ersten funkermittelten Kennung aus dem modulierten Trägersignal. Das Bedien- und Beobachtungsgerät hat auch Mittel zur Reaktivierung der Kommunikationsverbindung zwischen dem Bedien- und Beobachtungsgerät und den Automatisierungskomponenten und Mittel zur Freigabe der Bedienung der Automatisierungskomponenten über das mobile Bedien- und Beobachtungsgerät, falls der erste Abstand kleiner ist als ein vorgegebener erster Abstand und falls die funkermittelte erste Kennung der ersten Kennung entspricht.

In einem anderen Aspekt betrifft die Erfindung ein Verfahren zur Freigabe der Bedienung von Automatisierungskomponenten einer technischen Anlage über ein mobiles Bedien- und Beobachtungsgerät. Verfahrensgemäß erfolgt der Empfang einer ersten Nachricht durch die Automatisierungskomponenten, wobei die erste Nachricht von dem Bedien- und Beobachtungsgerät zuvor gesendet worden ist, wobei mittels der ersten Nachricht um Bedienung der Automatisierungskomponenten angefragt wird und wobei die erste Nachricht über eine drahtlose Kommunikationsverbindung von dem Bedien- und Beobachtungsgerät an die Automatisierungskomponenten übermittelt worden ist. In einem weiteren Schritt erfolgt die Übermittlung einer ersten Kennung einer ersten Transpondervorrichtung an das Bedien- und Beobachtungsgerät, wobei die erste Transpondervorrichtung einer technischen Anlage angebracht ist. Danach erfolgt die Aktivierung der ersten Transpondervorrichtung und die Deaktivierung der drahtlosen Kommunikationsverbindung. Nach Ablauf einer vorgegebenen Zeit wird die drahtlose Kommunikationsverbindung dann wieder aktiviert und die erste Transpondervorrichtung wird deaktiviert. Für den Fall, dass vom Bedien- und Beobachtungsgerät ein Freigabesignal empfangen wird, erfolgt die Freigabe der Bedienung der Automatisierungskomponenten für das Bedien- und Beobachtungsgerät.

In weiteren Aspekten betrifft die Erfindung eine Automatisierungskomponente einer technischen Anlage und ein HMI-System mit einer erfindungsgemäßen Automatisierungskomponenten und einem erfindungsgemäßen Bedien- und Beobachtungssystem.

Im Weiteren werden bevorzugte Ausführungsbeispiele der Erfindung mit Bezugnahme auf die Zeichnungen näher erläutert. Es zeigen:
- FIG 1: ein Blockdiagramm eines HMI-Systems,
- FIG 2: ein Flussdiagramm, das wesentliche Schritte eines erfindungsgemäßen Verfahrens zeigt,
- FIG 3: ein Blockdiagramm eines weiteren HMI-Systems,
- FIG 4: ein Blockdiagramm eines Trägersignals,
- FIG 5: ein weiteres Flussdiagramm eines erfindungsgemäßen Verfahrens.

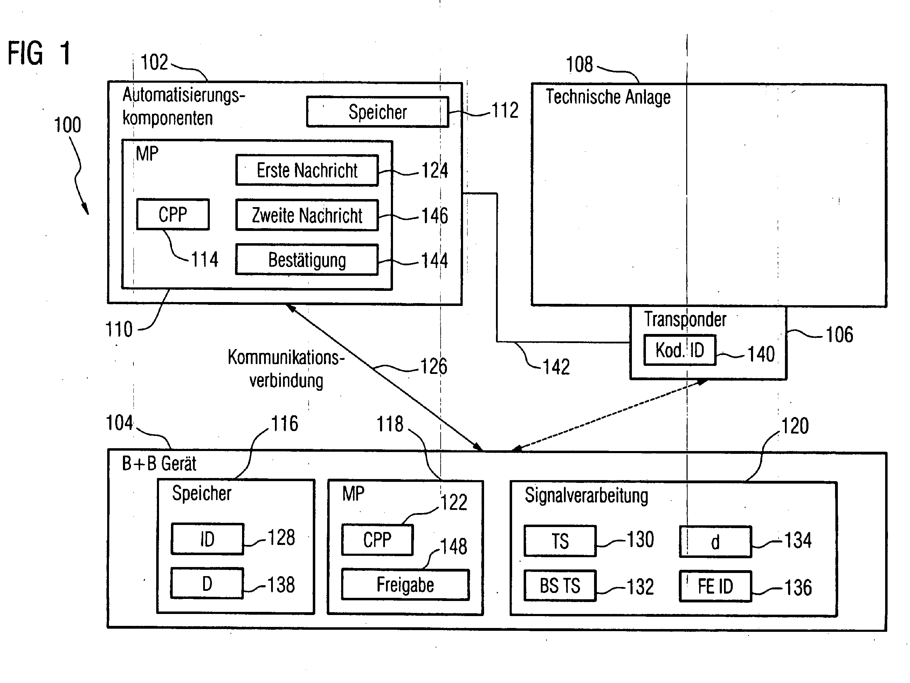

FIG 1 zeigt ein Blockdiagramm eines HMI-Systems 100. Das HMI-System 100 weist dabei Automatisierungskomponenten 102, ein Bedien- und Beobachtungsgerät 104 und eine Transpondervorrichtung 106 auf. Die Automatisierungskomponenten 102 sind für die Steuerung einer technischen Anlage 108 vorgesehen. Die Transpondervorrichtung 106 ist an der technischen Anlage angebracht und kann über die Automatisierungskomponenten 102 aktiviert bzw. deaktiviert werden. Dazu ist die Transpondervorrichtung 106 über die Verbindung 142 mit den Automatisierungskomponenten 102 verbunden. Bei der Verbindung 142 handelt es sich beispielsweise um ein gedrilltes, industrietaugliches Zwei-Leitungs-Kabel über das eine Versorgungsspannung an die Transpondervorrichtung 106 angelegt werden kann. Die Transpondervorrichtung 106 arbeitet bei Anliegen der Versorgungsspannung autonom.

Das mobile Bedien- und Beobachtungsgerät 104 ist ferner für die Bedienung und Beobachtung der Automatisierungskomponenten 102 bzw. der darauf ablaufenden Steuerungs-, Diagnose-, Alarmverarbeitungs- und Langzeitprozesse vorgesehen.

Die Automatisierungskomponenten 102 weisen einen Mikroprozessor 110 und einen Speicher 112 auf. Der Mikroprozessor 110 führt ein erstes Computerprogrammprodukt 114 aus, das permanent auf dem Speicher 112 gespeichert ist und z. B. nach der Inbetriebnahme der Automatisierungskomponenten 102 in den Mikroprozessor 110 geladen wird.

Das Bedien- und Beobachtungsgerät weist einen Speicher 116, einen Mikroprozessor 118 und eine Signalverarbeitungseinheit 120 auf. Der Mikroprozessor 118 führt ein zweites Computerprogrammprodukt 122 aus, das permanent auf dem Speicher 116 gespeichert ist und z. B. bei der Inbetriebnahme des Bedien-und Beobachtungsgeräts 104 in dem Mikroprozessor 118 geladen wird.

Nach Aktivierung des Bedien- und Beobachtungsgeräts 104 durch einen Benutzer, der eine sicherheitsrelevante Bedienung der technischen Anlage 108 über die Automatisierungskomponenten 102 durchführen will, erzeugt das Computerprogrammprodukt 122 eine erste Nachricht 124, die vom Bedien- und Beobachtungsgerät über eine Kommunikationsverbindung 126 an die Automatisierungskomponenten 102 übermittelt wird. Nach Empfang der ersten Nachricht 124 erzeugt das Computerprogrammprodukt 114 eine Bestätigungsnachricht 144, in der eine der Transpondervorrichtung 106 zugeordnete Kennung 128 enthalten ist. Die Bestätigungsnachricht 144 wird über die Kommunikationsverbindung 126 an das Bedien- und Beobachtungsgerät 104 übermittelt. Nach Erhalt der Kennung 128 speichert das mobile Kommunikationsgerät 104 die Kennung 128 auf dem Speicher 116, sendet eine zweite Nachricht 146 an die Automatisierungskomponenten 102 zur Bestätigung des Erhalts der Bestätigungsnachricht 144 und deaktiviert dann die Kommunikationsverbindung 126. Mittels der Signalverarbeitungseinheit 120 erzeugt das Bedien- und Beobachtungsgerät ein Trägersignal 130. Das Trägersignal 130 wird über eine Antenne (in FIG 1 nicht gezeigt) emittiert. Das Trägersignal 130 wird vom Transponder 106 zurückgestreut und dabei moduliert. Aus dem empfangenen zurückgestreuten und modulierten Trägersignal 132 kann die Signalverarbeitungseinheit 120 einen ersten Abstand 134 zwischen dem Bedien- und Beobachtungsgerät 104 und der Transpondervorrichtung 106 ermitteln. Ferner hat der Transponder auf das zurückgestreute Trägersignal 132 eine ihm zugeordnete kodierte Kennung 140 aufmoduliert. Aus dieser kodierten Kennung 140 ermittelt die Signalverarbeitungseinheit 120 zudem eine funkermittelte Kennung 136. In einem weiteren Schritt reaktiviert das Bedien- und Beobachtungsgerät die Kommunikationsverbindung 126 mit den Automatisierungskomponenten 102. Für den Fall, dass der erste Abstand 134 kleiner ist als ein vorgegebener erster Abstand 138, der permanent auf dem Bedien- und Beobachtungsgerät 104 bzw. auf dem Speicher 116 gespeichert ist, und für den Fall, dass die funkermittelte erste Kennung 136 der ersten Kennung 128, die zuvor von den Automatisierungskomponenten 102 an das Bedien- und Beobachtungsgerät übermittelt worden ist, entspricht, erfolgt die Freigabe der Bedienung durch Übermittlung eines Freigabesignals 148 über die Kommunikationsverbindung 126. Nach Erhalt des Freigabesignals 148 lassen sich die Automatisierungskomponenten 102 über das mobile Bedien- und Beobachtungsgerät 104 bedienen. Anderenfalls sperrt das Bedien- und Beobachtungsgerät 104 die Bedienung der Automatisierungskomponenten 102. Die Freigabe gilt jedoch nur solange der Benutzer des Bedien- und Beobachtungsgeräts die mittels der ersten Nachricht 124 erfragte Bedienung ausführt. Wünscht der Benutzer eine weitere Bedienung der Automatisierungskomponenten 102, so muss gemäß dem erfindungsgemäßen Verfahren erneut die Freigabe erteilt werden.

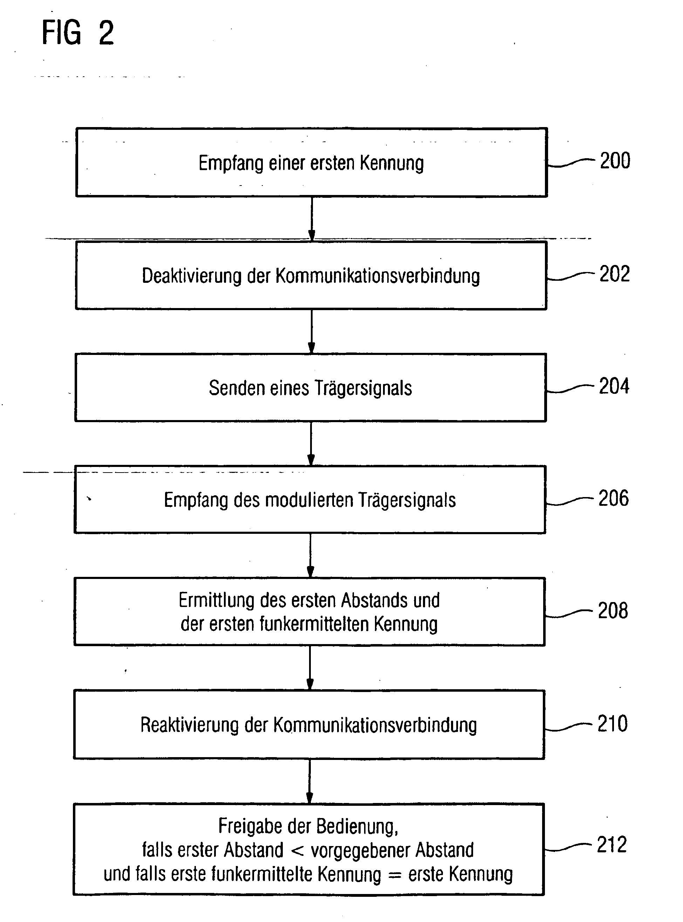

FIG 2 zeigt ein Flussdiagramm, das schematisch wesentliche Schritte des erfindungsgemäßen Verfahrens zur Freigabe der Bedienung von Automatisierungskomponenten einer technischen Anlage über ein mobiles Bedien- und Beobachtungsgerät darstellt. In Schritt 200 empfängt das Bedien- und Beobachtungsgerät eine erste Kennung einer ersten Transpondervorrichtung, wobei die erste Transpondervorrichtung an der technischen Anlage angebracht ist, und wobei die erste Transpondervorrichtung durch die Automatisierungskomponenten aktiviert worden ist. Die erste Kennung wurde dabei über eine drahtlose Kommunikationsverbindung von den Automatisierungskomponenten an das mobile Bedien- und Beobachtungsgerät übermittelt. In Schritt 202 erfolgt eine Deaktivierung der Kommunikationsverbindung zwischen dem Bedien- und Beobachtungsgerät und den Automatisierungskomponenten. In Schritt 204 sendet das Bedien- und Beobachtungsgerät ein Trägersignal und in Schritt 206 empfängt das Bedien- und Beobachtungsgerät das von der ersten Transpondervorrichtung modulierte Trägersignal. In Schritt 208 werden ein erster Abstand und eine erste funkermittelte Kennung der ersten Transpondervorrichtung aus dem modulierten Trägersignal ermittelt. Dabei entspricht der erste Abstand der Distanz zwischen dem Bedien- und Beobachtungsgerät und der ersten Transpondervorrichtung. In Schritt 210 reaktiviert das Bedien- und Beobachtungsgerät die Kommunikationsverbindung zu den Automatisierungskomponenten. Für den Fall, dass der erste Abstand kleiner ist als ein vorgegebener erster Abstand und falls die funkermittelte erste Kennung der ersten Kennung entspricht, erfolgt die Freigabe der Bedienung der Automatisierungskomponenten über das mobile Bedien- und Beobachtungsgerät in Schritt 212. Anderenfalls sperrt das Bedien- und Beobachtungsgerät die Bedienung der Automatisierungskomponenten über das Bedien- und Beobachtungsgerät.

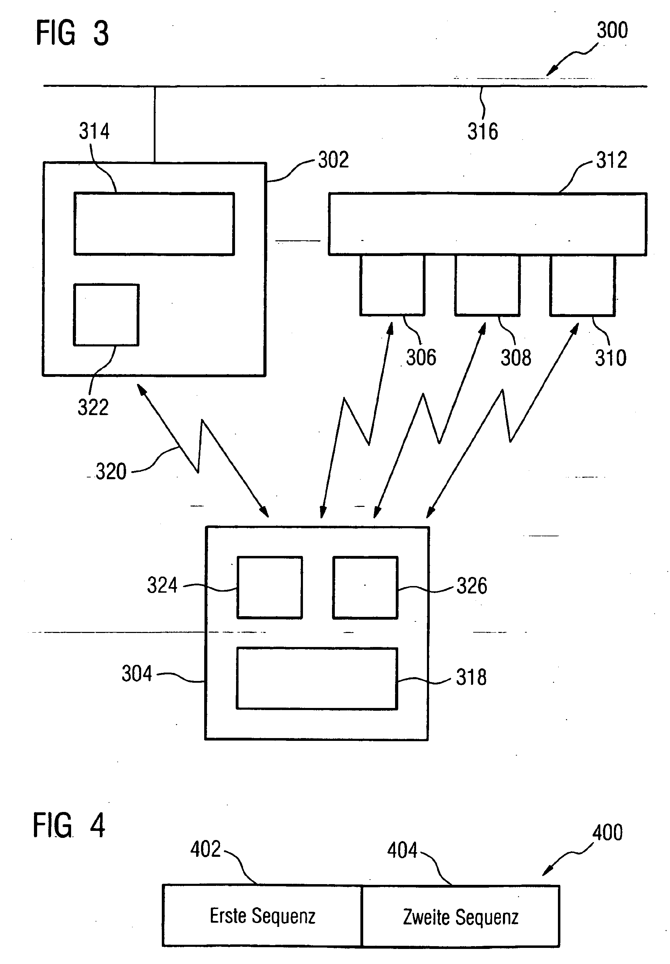

FIG 3 zeigt ein Blockdiagramm eines weiteren HMI-Systems 300. Das HMI-System 300 weist dabei Automatisierungskomponenten 302, ein Bedien- und Beobachtungsgerät 304 sowie als Beispiel drei Transpondervorrichtungen 306, 308 und 310 auf.. Die Transpondervorrichtungen 306, 308, 310 sind an einer technischen Anlage 312 angebracht. Die Automatisierungskomponenten 302 dienen zur Steuerung und zur Überwachung der technischen Anlage 312. Die Transpondervorrichtungen 306, 308, 310 können über die Automatisierungskomponenten 302 aktiviert und deaktiviert werden (z. B. über eine Spannungsversorgung, die von der Automatisierungskomponenten 302 aus erfolgt).

Die Automatisierungskomponenten 302 weisen eine speicherprogrammierbare Steuerung 314 auf, welche die Steuerung der technischen Betriebsmittel der technischen Anlage 312 gegebenenfalls in Echtzeit bewirkt. Die Automatisierungskomponenten 302 sind vorzugsweise an ein Bussystem 316, wie z. B. einem Profibus, angegliedert. Dieser ermöglicht eine universelle Vernetzung mehrerer Automatisierungskomponenten 302.

Zur Bedienung und Beobachtung der Automatisierungskomponenten 302 wird das Bedien- und Beobachtungsgerät 304 eingesetzt. Dieses kann z. B. als ein kabelloses Handheld-Terminal ausgeführt sein und z. B. über ein Display und eine Tastatur 318 verfügen. Weiterhin können Not-, Aus- und Quittungstaste und Schlüsselschalter vorgesehen sein. Das mobile Bedien- und Beobachtungsgerät 304 tauscht in einer berührungslosen Weise Nutzdaten über eine Kommunikationsverbindung 320 mit den Automatisierungskomponenten 302 der technischen Anlage 312 aus. Eine Bedienperson, die das Bedien- und Beobachtungsgerät 304 gebraucht, kann sich somit z. B. Messwerte von der technischen Anlage 312 auf dem Display des Bedien- und Beobachtungsgeräts 304 anzeigen lassen, bzw. Steuerbefehle über deren Tastatur 318 eingeben und diese an die Automatisierungskomponente 302 senden, wo diese Befehle ausgeführt werden, falls der Benutzer zuvor eine Freigabe für die Bedienung der Automatisierungskomponenten 302 erhalten hat.

Zur Übermittlung von z. B. Messwerten und Steuerbefehlen zwischen dem mobilen Bedien- und Beobachtungsgerät 304 und der Automatisierungskomponenten 302 verfügen das mobile Bedien-und Beobachtungsgerät 304 als auch die Automatisierungskomponenten 302 über entsprechende Datenübertragungsmodule 322 und 324. Die Datenübertragung zwischen den Datenübertragungsmodulen 322 und 324 erfolgt über die Kommunikationsverbindung 320 und wird vorzugsweise mit Hilfe von Radiofrequenz (RF)-Signalen realisiert. Hierbei können, wie bereits zuvor erwähnt, verschiedene Datenübertragungs-Protokolle, wie z.B. WLAN oder Bluetooth zum Einsatz kommen.

Das mobile Bedien- und Beobachtungsgerät 304 verfügt zudem über ein Lokalisierungsmodul 326, das zum Senden und zum Empfangen von Radarsignalen ausgebildet ist. Die Transpondervorrichtungen 306, 308, 310 sind dazu ausgebildet, die vom Lokalisierungsmodul 326 ausgesendeten Trägersignale zu modulieren und zu reflektieren. Die von den Transpondervorrichtungen 306, 308, 310 modulierten und reflektierten Trägersignale können dann von dem Lokalisierungsmodul 326 empfangen werden, woraus zum einen der Abstand zwischen dem Bedien- und Beobachtungsgerät und dem entsprechenden Transponder und zum anderen eine funkermittelte Kennung für den entsprechenden Transponder ermittelt werden kann. Das mobile Bedien- und Beobachtungsgerät 304 ist somit in der Lage, eine Abstandsbestimmung bezüglich der Position mindestens einer der Transpondervorrichtungen 306, 308, 310 selbständig durchzuführen. Die Transpondervorrichtungen 306, 308, 310 müssen hierbei keine Signalauswertung vornehmen.

Die Transpondervorrichtungen 306, 308, 310 können jedoch das Trägersignal nur reflektieren und modulieren, wenn diese aktiviert sind. Um eine Störung der Abstandsmessung zwischen dem Bedien- und Beobachtungsgerät 304 und einem der Transponder 306, 308, 310 durch einen anderen Transponder zu vermeiden, aktivieren die Automatisierungskomponenten 302 erfindungsgemäß jeweils nur eine der Transpondervorrichtungen 306, 308, 310. Beispielsweise übermitteln die Automatisierungskomponenten 302 nach Empfang einer ersten Nachricht durch das Bedien- und Beobachtungsgerät, mittels derer die Bedienperson des Geräts den Automatisierungskomponenten 302 signalisiert, dass eine Bedienung der Automatisierungskomponenten 302 gewünscht wird, die Kennung einer der Transpondervorrichtungen, beispielsweise der Transpondervorrichtung 306. Danach erst wird die Transpondervorrichtung 306 aktiviert, während die anderen beiden Transpondervorrichtungen 308 und 310 deaktiviert bleiben. Nachdem die Kennung des Transponders 306 durch das Bedien- und Beobachtungsgerät 304 empfangen wurde, wird die Kommunikationsverbindung 320 deaktiviert. Im Anschluss daran ermittelt dann das Bedien- und Beobachtungsgerät, wie zuvor beschrieben, über das Lokalisierungsmodul 326 den Abstand zum Transponder 306 sowie eine funkermittelte Kennung des Transponders 306, die der Transponder 306 in kodierter Form auf das von dem Lokalisierungsmodul 326 ausgesendeten Trägersignal aufmoduliert. Erst im Anschluss an die Ermittlung des Abstandes zum Transponder 306 und nach der Ermittlung der funkermittelten Kennung des Transponders 306, wird die Kommunikationsverbindung 320 wieder aktiviert. Falls der Abstand zum Transponder 306 kleiner ist als ein vorgegebener erste Abstand, der dem maximal zulässigen Abstand entspricht, und falls die funkermittelten Kennung der Kennung entspricht, die von den Automatisierungskomponenten zuvor übermittelt worden ist, erfolgt eine Freigabe der Bedienung der Automatisierungskomponenten 302 über das Bedien- und Beobachtungsgerät.

Sollte die Abstandsmessung bzw. die Ermittlung der funkermittelten Kennung fehlgeschlagen sein, dann aktivieren im Anschluss daran die Automatisierungskomponenten 302 die Transpondervorrichtung 308, und deaktivieren die Transpondervorrichtung 306. Die Kennung der Transpondervorrichtung 308 wird nun, wie zuvor für die Transpondervorrichtung 306 über die Kommunikationsverbindung 320 an das Bedien- und Beobachtungsgerät übermittelt. Nach erneuter Deaktivierung der Kommunikationsverbindung 320 ermittelt, wie zuvor beschrieben, das Bedien- und Beobachtungsgerät den Abstand zum Transponder 308, sowie die funkermittelte Kennung des Transponders 308. Im Anschluss daran wird die Kommunikationsverbindung 320 wieder aktiviert. Falls nun der Abstand zum Transponder 308 kleiner ist als der vorgegebene erste Abstand und falls die funkermittelte Kennung der Kennung entspricht, die von den Automatisierungskomponenten zuvor übermittelt worden ist, erfolgt eine Freigabe der Bedienung der Automatisierungskomponenten 302 über das Bedien- und Beobachtungsgerät 304.

Andernfalls erfolgt in der gleichen Art und Weise, wie zuvor für die Transpondervorrichtung 306 und 308 beschrieben, die Ermittlung des Abstands zur Transpondervorrichtung 310, sowie die Ermittlung der funkermittelten Kennung der Transpondervorrichtung 310 durch das Bedien- und Beobachtungsgerät. Nachdem das Bedien- und Beobachtungsgerät 304 den Abstand zur Transpondervorrichtung 310 ermittelt hat, kann dieser Abstand mit dem vorgegebenen ersten Abstand verglichen werden. Falls dieser Abstand kleiner ist als der vorgegebene erste Abstand und falls die entsprechend funkermittelte Kennung der Kennung entspricht, die von den Automatisierungskomponenten an das Bedien- und Beobachtungsgerät zuvor übermittelt worden ist, erfolgt für die Bedienperson die Freigabe der Bedienung der Automatisierungskomponenten 302 über das mobile Bedien-und Beobachtungsgerät 304.

FIG 4 zeigt ein Blockdiagramm eines Trägersignals 400. Das Trägersignal 400 weist eine erste Sequenz 402 und eine zweite Sequenz 404 auf, wobei die zweite Sequenz 404 im Anschluss an die erste Sequenz 402 emittiert wird. Die erste Sequenz 402 ist zur Ermittlung der Entfernung zwischen dem Bedien- und Beobachtungsgerät und der Transpondervorrichtung vorgesehen. Die zweite Sequenz 404 ist zur Ermittlung der Kennung der Transpondervorrichtung vorgesehen.

Die erste Sequenz 402 ist dabei ist so ausgebildet, dass damit die Ermittlung des Abstandes zu der Transpondervorrichtung mittels des nach dem Stand der Technik bekannten Frequency Modulated Continuous Wave (FMCW)-Verfahrens ermittelt werden kann. Das FMCW-Verfahren entspricht einem frequenzmodulierten Dauerstrich-Radarverfahren, wobei kontinuierliche Radarstrahlung ausgesandt wird und wobei die Frequenz der Radarstrahlung einer periodischen Modulation unterliegt. Da sich die Sendefrequenz des Trägersignals in der ersten Sequenz kontinuierlich ändert, weisen ausgesendetes und vom Objekt reflektiertes Radarsignal eine Frequenzverschiebung auf, die einem Laufzeitunterschied entspricht. Dieser Laufzeitunterschied spiegelt den zweifachen Abstand zwischen dem Bedien- und Beobachtungsgerät und dem reflektierenden Objekt wider. Zur Bestimmung einer Entfernung werden die empfangenen Signale der ersten Sequenz typischerweise einer spektralen Analyse unterzogen. Erstellt man ein Leistungsspektrum über die Frequenzverschiebung des empfangenen Signals bezogen auf die Sendefrequenz, so geben Leistungsspitzen des Spektrums direkt Aufschluss über die Entfernung zu der reflektierenden Transpondervorrichtung. Die zweite Sequenz 404 ist so ausgebildet, dass die Transpondervorrichtung die kodierte Kennung auf diese aufmodulieren kann. Die zeitlichen Längen der ersten Sequenz 402 und der zweiten Sequenz 404 sind ferner so gewählt, dass die rückreflektierten und wiederempfangenen ersten und zweiten Sequenzen voneinander separiert werden können.

Alternativ bestünde auch die Möglichkeit, dass der Abstand zeitgleich mit der Kennung in der ersten oder zweiten Sequenz ermittelt wird. Damit kann die notwendige Zeit für die Ermittlung reduziert werden.

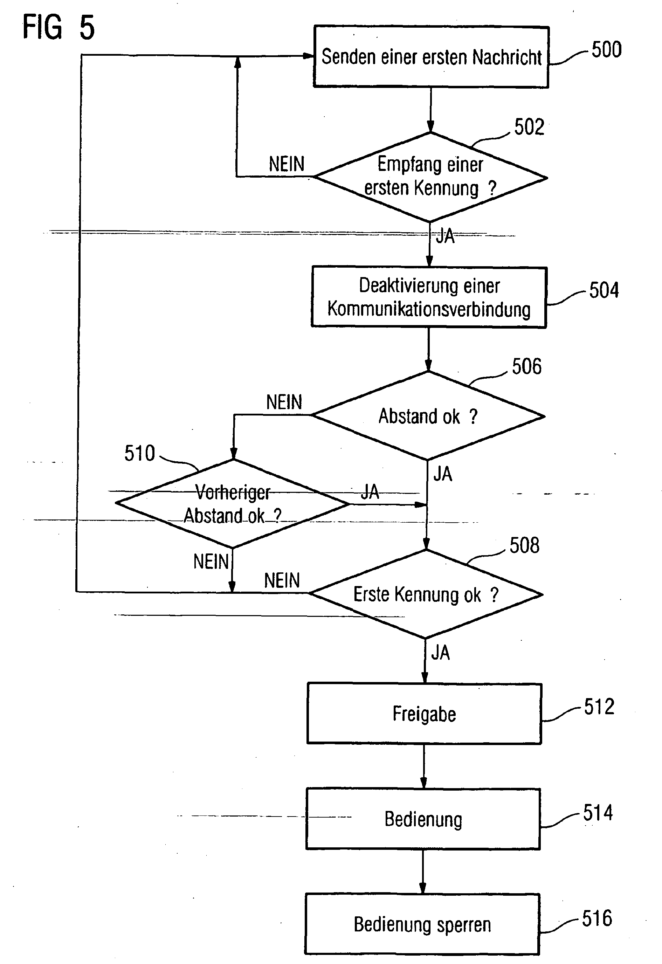

FIG 5 zeigt ein weiteres Flussdiagramm eines erfindungsgemäßen Verfahrens. In Schritt 500 sendet das Bedien- und Beobachtungsgerät eine erste Nachricht an die Automatisierungskomponenten. Falls in Schritt 502 eine erste Kennung einer Transpondervorrichtung empfangen wird, z.B. innerhalb einer Bestätigungsnachricht, die von den Automatisierungskomponenten an das Bedien- und Beobachtungsgerät gesendet worden ist, erfolgt in Schritt 504 eine Deaktivierung der Kommunikationsverbindung über die die erste Nachricht und die Bestätigungsnachricht übermittelt worden sind. Falls in Schritt 502, z.B. nach Ablauf einer vorgegebenen Zeitspanne, keine erste Kennung empfangen wird, erfolgt eine Wiederholung des Schrittes 500.

In Schritt 506 wird ermittelt, ob ein erster Abstand zwischen dem Bedien- und Beobachtungsgerät und der Transpondervorrichtung, der mittels des FMCW-Verfahrens ermittelt wurde, kleiner ist als ein vorgegebener Abstand, so dass das Bedien- und Beobachtungsgerät sich innerhalb eines vorgegebenen Sicherheitsbereichs in Bezug auf die Transpondervorrichtung befindet. Falls der erste Abstand kleiner ist als der vorgegebene Abstand erfolgt in Schritt 508 die Überprüfung, ob eine funkermittelte Kennung, die von der Transpondervorrichtung in kodierter Form auf ein Trägersignal aufmoduliert worden ist, der ersten Kennung entspricht. Falls dies der Fall ist, erfolgt in Schritt 512 die Freigabe der Bedienung der Automatisierungskomponenten für den Benutzer des Bedien- und Beobachtungsgeräts. In Schritt 514 erfolgt die Bedienung der Automatisierungskomponenten durch den Benutzer. Nach erfolgter Bedienung wird dann in Schritt 516 die Bedienung des Bedien-und Beobachtungsgeräts für den Benutzer wieder gesperrt.

Falls in Schritt 506 der erste Abstand nicht mit dem vorgegebenen Abstand verglichen werden kann, z.B., weil die Entfernungsmessung zur Ermittlung des ersten Abstands kein Ergebnis geliefert hat, dann wird in Schritt 510 der erste Abstand, der aus einer vorhergehenden Messung (oder z.B. der Durchschnittswert von mehreren vorhergehenden Messungen) ermittelt worden ist, mit dem vorgegebenen Abstand verglichen. Ist der erste Abstand aus der vorhergehenden Abstandsmessung kleiner als der vorgegebene Abstand, dann wird im Anschluss daran der Schritt 508 ausgeführt, sonst beginnt das Verfahren erneut mit dem Schritt 500.

## Patentansprüche

1. Verfahren zur Freigabe der Bedienung von Automatisierungskomponenten (102) einer technischen Anlage (108) über ein mobiles Bedien- und Beobachtungsgerät (104) mit den Schritten in angegebener Reihenfolge:
a1) Übermittlung einer ersten Nachricht (124) an die Automatisierungskomponenten nach Aktivierung des Bedien- und Beobachtungsgeräts durch einen Benutzer, wobei mittels der ersten Nachricht um Bedienung der Automatisierungskomponenten durch den Benutzer angefragt wird;
a2) Empfang einer Bestätigungsnachricht (144) von den Automatisierungskomponenten, wobei eine erste Kennung (128) in der ersten Bestätigungsnachricht oder in einer weiteren Nachricht in Anschluss an die Bestätigungsnachricht übermittelt wird;
a3) wobei die erste Kennung (128) einer ersten Transpondervorrichtung (106) durch das mobile Bedien- und Beobachtungsgerät empfangen wird, wobei die erste Transpondervorrichtung an der technischen Anlage angebracht ist, wobei die erste Kennung über eine drahtlose Kommunikationsverbindung (126) von den Automatisierungskomponenten an das mobile Bedien- und Beobachtungsgerät übermittelt worden ist; a4) Senden einer zweiten Nachricht (146) an die Automatisierungskomponenten zur Bestätigung des Empfangs der Bestätigungsnachricht (144), wobei die erste Transpondervorrichtung nach Empfang der zweiten Nachricht (146) von den Automatisierungskomponenten aktiviert wird.
b) Deaktivierung der Kommunikationsverbindung zwischen dem Bedien- und Beobachtungsgerät und den Automatisierungskomponenten;
c) Senden eines Trägersignals (130);
d) Empfang des von der ersten Transpondervorrichtung modulierten Trägersignals (132);
e) Ermittlung eines ersten Abstands (134) zu der ersten Transpondervorrichtung und einer ersten funkermittelten Kennung (136) der ersten Transpondervorrichtung aus dem modulierten Trägersignal;
f) Reaktivierung der Kommunikationsverbindung zwischen dem Bedien- und Beobachtungsgerät und den Automatisierungskomponenten;
g) Freigabe der Bedienung der Automatisierungskomponenten über das mobile Bedien- und Beobachtungsgerät, falls der erste Abstand kleiner ist als ein vorgegebener erster Abstand (138) und falls die funkermittelte erste Kennung (136) der ersten Kennung (128) entspricht.

2. Verfahren nach Anspruch 1, wobei das Trägersignal (130) eine erste Sequenz aufweist, wobei die erste Sequenz zur Ermittlung des ersten Abstands und zur Ermittlung der ersten funkermittelten Kennung verwendet wird.

3. Verfahren nach einem der Anspruch 1, wobei das Trägersignal (130; 400) eine erste Sequenz (402) und eine zweite Sequenz (404) aufweist, wobei die erste Sequenz zur Ermittlung des ersten Abstands verwendet wird und wobei die zweite Sequenz zur Ermittlung der ersten funkermittelten Kernnung verwendet wird.

4. Verfahren nach Anspruch 3, wobei die erste Sequenz zur Ermittlung des ersten Abstands mittels des FMCW-Verfahrens geeignet ist.

5. Verfahren nach Anspruch 3, wobei eine erste kodierte Kennung (140) auf die zweite Sequenz durch die Transpondervorrichtung aufmoduliert wird, wobei die erste funkermittelte Kennung (136) aus der ersten kodierten Kennung ermittelt wird.

6. Verfahren nach Anspruch 5, wobei die erste funkermittelte Kennung aus der ersten kodierten Kennung mittels einer Korrelationsdetektion ermittelt wird, wobei die erste kodierte Kennung mittels Golay-Codes auf der Transpondervorrichtung kodiert ist.

7. Verfahren nach einem der vorhergehenden Ansprüche, wobei der Frequenzbereich des Trägersignals (130) innerhalb eines vorgegebenen Frequenzbandes liegt, wobei die Bandbreite des vom ersten Transponder aufmodulierten Signals wesentlich kleiner ist als die Bandbreite des Frequenzbandes.

8. Verfahren nach Anspruch 7, wobei der Frequenzbereich für jedes zu sendende Trägersignal zufällig aus dem Frequenzband ausgewählt wird.

9. Verfahren nach einem der vorhergehenden Ansprüche, wobei die ermittelten ersten Abstände auf dem Bedien- und Beobachtungsgerät gespeichert werden, wobei der zuletzt ermittelte gespeicherte Abstand mit dem vorgegebenen ersten Abstand verglichen wird, falls in Schritt e) kein aktueller erster Abstand-ermittelt werden kann.

10. Computerprogrammprodukt (114) mit computerausführbaren Instruktionen, um ein Verfahren gemäß einem der Ansprüche 1 bis 9 auszuführen.

11. Bedien- und Beobachtungsgerät (104) zur Bedienung von Automatisierungskomponenten (102) einer technischen Anlage (108) mit Mitteln zur Ausführung der folgenden Schritte in der angegebenen Reihenfolge:
- Übermittlung einer ersten Nachricht (124) an die Automatisierungskomponenten nach Aktivierung des Bedien- und Beobachtungsgeräts durch einen Benutzer, wobei mittels der ersten Nachricht um Bedienung der Automatisierungskomponenten angefragt wird;
- Empfang einer Bestätigungsnachricht (144) von den Automatisierungskomponenten, wobei eine erste Kennung (128) in der ersten Bestätigungsnachricht oder in einer weiteren Nachricht in Anschluss an die Bestätigungsnachricht übermittelt wird;
- Empfang der ersten Kennung (128) einer ersten Transpondervorrichtung (106) durch das mobile Bedien- und Beobachtungsgerät, wobei die erste Transpondervorrichtung an der technischen Anlage angebracht ist, wobei die erste Transpondervorrichtung durch die Automatisierungskomponenten aktivierbar ist und wobei die erste Kennung über eine drahtlose Kommunikationsverbindung (126) von den Automatisierungskomponenten an das mobile Bedien- und Beobachtungsgerät übermittelt worden ist;
- Senden einer zweiten Nachricht (146) an die Automatisierungskomponenten zur Bestätigung des Empfangs der Bestätigungsnachricht, wobei die erste Transpondervorrichtung (106) nach Empfang der zweiten Nachricht von den Automatisierungskomponenten aktiviert wird;
- Deaktivierung der Kommunikationsverbindung zwischen dem Bedien- und Beobachtungsgerät und den Automatisierungskomponenten;
- Senden eines Trägersignals (130);
- Empfang des von der ersten Transpondervorrichtung modulierten Trägersignals (132);
- Ermittlung eines ersten Abstands (134) zu der ersten Transpondervorrichtung und einer ersten funkermittelten Kennung (136) aus dem modulierten Trägersignal;
- Reaktivierung der Kommunikationsverbindung zwischen dem Bedien- und Beobachtungsgerät und den Automatisierungskomponenten;
- Freigabe der Bedienung der Automatisierungskomponenten über das mobile Bedien- und Beobachtungsgerät, falls der erste Abstand kleiner ist als ein vorgegebener erster Abstand (138) und falls die funkermittelte erste Kennung (136) der ersten Kennung (128) entspricht.

12. Bedien- und Beobachtungsgerät nach Anspruch 11, ferner mit Mitteln zur Erzeugung des Trägersignals, so dass das Trägersignal (400) eine erste Sequenz (402) und eine zweite Sequenz (404) aufweist, wobei die erste Sequenz zur Ermittlung des ersten Abstands verwendbar ist und wobei die zweite Sequenz zur Ermittlung der ersten funkermittelten Kennung verwendbar ist.

13. Bedien- und Beobachtungsgerät nach Anspruch 12, wobei eine erste kodierte Kennung auf die zweite Sequenz durch die Transpondervorrichtung aufmoduliert wird, wobei das Bedien- und Beobachtungsgerät Mittel zur Dekodierung der ersten kodierten Kennung aufweist.

14. Bedien- und Beobachtungsgerät nach Anspruch 13, wobei die erste kodierte Kennung mittels Golay-Codes auf der Transpondervorrichtung kodiert ist, wobei das Bedien- und Beobachtungsgerät Mittel zur Durchführung einer Korrelationsdetektion aufweist, wobei die erste funkermittelte Kennung aus der ersten kodierten Kennung mittels der Korrelationsdetektion ermittelbar ist.

15. Bedien- und Beobachtungsgerät nach einem der Ansprüche 11 bis 14, ferner mit Mitteln zur Erzeugung des Trägersignals innerhalb eines vorgegebenen Frequenzbandes, wobei die Bandbreite des vom Transponder aufmodulierten Signals wesentlich kleiner ist als die Bandbreite des Frequenzbandes.

16. HMI System (100) mit einem Bedien- und Beobachtungsgerät nach einem der Ansprüche 12 bis 16 und mit einer Automatisierungs komponente (102) einer technischen Anlage, wobei die Automatisierungskomponente über ein Bedien- und Beobachtungsgerät steuerbar ist, mit:
- Mitteln zum Empfang einer ersten Nachricht (124) von dem Bedien- und Beobachtungsgerät (104), wobei mittels der ersten Nachricht um Bedienung der Automatisierungskomponente angefragt wird, wobei die erste Nachricht über eine drahtlose Kommunikationsverbindung (126) von dem Bedien- und Beobachtungsgerät an die Automatisierungskomponente übermittelt worden ist;
- Mitteln zur Übermittlung einer ersten Kennung (128) einer ersten Transpondervorrichtung (106) an das Bedien- und Beobachtungsgerät, wobei die Transpondervorrichtung an der technischen Anlage angebracht und dazu ausgestaltet ist nach Aktivierung auf ein Trägersignal von dem Bedien- und Beobachtungsgerät (104) zu antworten;
- Mitteln zur Aktivierung der ersten Transpondervorrichtung, wobei die Mittel dazu ausgestaltet sind, dass die erste Transpondervorrichtung nach Übermitteln der Kennung aktiviert wird; - Mitteln zur Deaktivierung der drahtlosen Kommunikationsverbindung; - Mitteln zur Reaktivierung der drahtlosen Kommunikationsverbindung nach Ablauf einer vorgegebenen Zeit; - Mitteln zur Deaktivierung der ersten Transpondervorrichtung; - Freigabe der Bedienung der Automatisierungskomponente falls vom Bedien- und Beobachtungsgerät ein Freigabesignal (148) empfangen wird.

## Claims

1. Method for enabling the operation of automation components (102) of a technical system (108) via a mobile control and monitoring device (104) with the steps in the sequence specified:
a1) Transmitting a first message (124) to the automation components after the control and monitoring device has been activated by a user, with the user requesting, by means of the first message, information about the operation of the automation components;
a2) Receiving an acknowledgement message (144) from the automation components, with a first identification (128) being transmitted in the first acknowledgement message or in a further message following the acknowledgement message;
a3) wherein the first identification (128) from a first transponder device (106) is received by the mobile control and monitoring device, with the first transponder device being attached to the technical system, with the first identification having been transmitted via a wireless communication connection (126) from the automation components to the mobile control and monitoring device;
a4) Sending a second message (146) to the automation components to confirm receipt of the acknowledgement message (144), with the first transponder device (106) being activated after receiving the second message (146) from the automation components.
b) Deactivating the communication connection between the control and monitoring device and the automation components;
c) Sending a carrier signal (130);
d) Receiving the carrier signal (132) modulated by the first transponder device;
e) Determining a first distance (134) to the first transponder device and a first radio-determined identification (136) of the first transponder device from the modulated carrier signal;
f) Reactivating the communication connection between the control and monitoring device and the automation components;
g) Enabling the operation of the automation components via the mobile control and monitoring device, if the first distance is shorter than a predetermined first distance (138) and if the radio-determined first identification (136) corresponds to the first identification (128).

2. Method according to claim 1, with the carrier signal (130) comprising a first sequence, with the first sequence being used for determining the first distance and for determining the first radio-determined identification.

3. Method according to claim 1, with the carrier signal (130; 400) comprising a first sequence (402) and a second sequence (404), with the first sequence being used for determining the first distance and with the second sequence being used for determining the first radio-determined identification.

4. Method according to claim 3, with the first sequence being suitable for determining the first distance by means of the frequency modulated continuous wave (FMCW) method.

5. Method according to claim 3, with a first coded identification (140) being modulated on the second sequence by the transponder device, with the first radio-determined identification (136) being determined from the first coded identification.

6. Method according to claim 5, with the first radio-determined identification being determined from the first coded identification by means of a correlation detection, with the first coded identification being coded by means of Golay Codes on the transponder device.

7. Method according to one of the preceding claims, with the frequency range of the carrier signal (130) lying within a predetermined frequency band, with the bandwidth of the signal modulated by the first transponder being considerably smaller than the bandwidth of the frequency band.

8. Method according to claim 7, with the frequency range for each carrier signal to be sent being selected at random from the frequency band.

9. Method according to one of the preceding claims, with the determined first distances being stored on the control and monitoring device, with the stored distance that was determined last being compared to the stored distance with the predetermined first distance, if in step e) a recent first distance cannot be determined.

10. Computer program product (114) with instructions that can be carried out on a computer in order to carry out a method in accordance with one of claims 1 to 9.

11. Control and monitoring device (104) for the operation of automation components (102) of a technical system (108) with means for carrying out the following steps in the sequence specified:
- Transmitting a first message (124) to the automation components after the control and monitoring device has been activated by a user, with the user requesting, by means of the first message, information about the operation of the automation components;
- Receiving an acknowledgement message (144) from the automation components, with the first identification (128) being transmitted in the first acknowledgement message or in a further message following the acknowledgement message;
- Receiving the first identification (128) from a first transponder device (106) by the mobile control and monitoring device, with the first transponder device being attached to the technical system, with the first transponder device being able to be activated by the automation components and with the first identification having been transmitted via a wireless communication connection (126) from the automation components to the mobile control and monitoring device;
- Sending a second message (146) to the automation components to confirm receipt of the acknowledgement message, with the first transponder device (106) being activated after receiving the second message from the automation components.
- Deactivating the communication connection between the control and monitoring device and the automation components;
- Sending a carrier signal (130);
- Receiving the carrier signal (132) modulated by the first transponder device;
- Determining a first distance (134) to the first transponder device and a first radio-determined identification (136) from the modulated carrier signal;
- Reactivating the communication connection between the control and monitoring device and the automation components;
- Enabling the operation of the automation components via the mobile control and monitoring device if the first distance is shorter than a predetermined first distance (138) and if the radio-determined first identification (136) corresponds to the first identification (128).

12. Control and monitoring device according to claim 11, in addition with means for generating the carrier signal, so that the carrier signal (400) comprises a first sequence (402) and a second sequence (404), with the first sequence being able to be used for determining the first distance and with the second sequence able to be used for determining the first radio-determined identification.

13. Control and monitoring device according to claim 12, with a first coded identification being modulated upon the second sequence by means of the transponder device, with the control and monitoring device comprising means for decoding the first coded identification.

14. Control and monitoring device according to claim 13, with the first coded identification being coded by means of Golay Codes on the transponder device, with the control and monitoring device comprising means for carrying out a correlation detection, with the first radio-determined identification able to be determined from the first coded identification by means of the correlation detection.

15. Control and monitoring device according to one of claims 11 to 14, in addition with means for generating the carrier signal within a predetermined frequency range, with the bandwidth of the signal modulated by the first transponder being considerably smaller than the bandwidth of the frequency band.

16. HMI system (100) with a control and monitoring device according to one of claims 12 to 16 and with an automation component (102) of a technical system, with the automation component able to be controlled via a control and monitoring device, with:
- Means for receiving a first message (124) from the control and monitoring device (104), with it being possible to request by means of the first message information about the operation of the automation components and with the first message having been transmitted via a wireless communication connection (126) from the control and monitoring device to the automation components;
- Means for transmitting a first identification (128) from a first transponder device to the control and monitoring device, with the transponder device being attached to the technical system and being designed to respond to a carrier signal from the control and monitoring device (104) after activation ;
- Means for activating the first transponder device, with means being designed such that the first transponder device is activated after transmission of the identification;
- Means for deactivating the wireless communication connection;
- Means for reactivating the wireless communication connection after the expiry of a predetermined time;
- Means for deactivating the first transponder device;
- Means for the enabling of the operation of the automation components if an enabling signal (148) was received by the control and monitoring device.

## Revendications

1. Procédé d'autorisation de la commande de composants ( 102 ) d'automatisation d'une installation ( 108 ) technique par un appareil ( 104 ) mobile de commande et d'observation, comprenant les stades dans l'ordre indiqué :
a1 ) transmission d'un premier message ( 124 ) aux composants d'automatisation après activation de l'appareil de commande et d'observation par un utilisateur, dans lequel il est demandé par l'utilisateur au moyen du premier message que les composants d'automatisation soient commandés ;
a2 ) réception d'un message ( 144 ) de confirmation par les composants d'automatisation, une première caractérisation ( 128 ) dans le premier message de confirmation ou dans un autre message à la suite du message de confirmation étant transmise ;
a3 dans lequel la première caractérisation ( 128 ) d'un premier dispositif ( 106 ) transpondeur est reçue par l'appareil mobile de commande et d'observation, le premier dispositif transpondeur étant mis sur l'installation technique, la première caractérisation ayant été transmise par une liaison ( 126 ) de communication sans fil des composants d'automatisation à l'appareil mobile de commande et d'observation ;
a4 ) envoi d'un deuxième message ( 146 ) aux composants d'automatisation pour la confirmation de la réception du message ( 144 ) de confirmation, le premier dispositif transpondeur étant activé après réception du deuxième message ( 146 ) par les composants d'automatisation ;
b ) désactivation de la liaison de communication entre l'appareil de commande et d'observation et les composants d'automatisation ;
c ) envoi d'un signal ( 130 ) porteur ;
d ) réception du signal ( 132 ) porteur modulé par le premier dispositif transpondeur ;
e ) détermination d'une première distance ( 134 ) au premier dispositif transpondeur et d'une première caractérisation ( 136 ) déterminée par radio du premier transpondeur à partir du signal porteur modulé ;
f ) réactivation de la liaison de communication entre l'appareil de commande et d'observation et les composants d'automatisation ;
g ) autorisation de la commande des composants d'automatisation par l'appareil mobile de commande et d'observation, si la première distance est plus petite qu'une première distance ( 138 ) prescrite et si la première caractérisation ( 136 ) déterminée par radio correspond à la première caractérisation ( 128 ).

2. Procédé suivant la revendication 1, dans lequel le signal ( 130 ) porteur a une première séquence, la première séquence étant utilisée pour la détermination de la première distance et pour la détermination de la première caractérisation déterminée par radio.

3. Procédé suivant la revendication 1, dans lequel le signal ( 130, 400 ) porteur a une première séquence ( 402 ) et une deuxième séquence ( 404 ), la première séquence étant utilisée pour la détermination de la première distance et la deuxième distance étant utilisée pour la détermination de la première caractérisation déterminée par radio.

4. Procédé suivant la revendication 3, dans lequel la première séquence est appropriée à la détermination de la première distance au moyen du procédé FMCW.

5. Procédé suivant la revendication 3, dans lequel une première caractérisation ( 140 ) codée est modulée sur la deuxième séquence par le dispositif transpondeur, la première caractérisation ( 136 ) déterminée par radio étant déterminée à partir de la première caractérisation codée.

6. Procédé suivant la revendication 5, dans lequel la première caractérisation modulée par radio est déterminée à partir de la première caractérisation codée au moyen d'une détection de corrélation, la première caractérisation codée étant codée sur le dispositif transpondeur au moyen du code Golay.

7. Procédé suivant l'une des revendications précédentes, dans lequel le domaine de fréquence du domaine ( 130 ) porteur se trouve à l'intérieur d'une bande de fréquence prescrite, la largeur de bande du signal modulé par le premier transpondeur étant sensiblement plus petite que la largeur de bande de fréquence.

8. Procédé suivant la revendication 7, dans lequel le domaine de fréquence pour chaque signal porteur à envoyer est choisi au hasard dans la bande de fréquence.

9. Procédé suivant l'une des revendications précédentes, dans lequel les premières distances déterminées sont mémorisées sur l'appareil de commande et d'observation, la distance mémorisée et déterminée en dernier étant comparée à la première distance prescrite si au stade e ), une première distance présente ne peut pas être déterminée.

10. Produit ( 114 ) de programme informatique ayant des instructions pouvant être réalisées sur ordinateur pour la mise en oeuvre d'un procédé suivant l'une des revendications 1 à 9.

11. Appareil ( 104 ) de commande et d'observation pour la commande de composants ( 102 ) d'automatisation d'une installation ( 108 ) technique ayant des moyens de réalisation des stades suivants dans l'ordre indiqué :
- transmission d'un premier message ( 124 ) aux composants d'automatisation après activation de l'appareil de commande et d'observation par un utilisateur, dans lequel il est demandé par l'utilisateur au moyen du premier message que les composants d'automatisation soient commandés ;
- réception d'un message ( 144 ) de confirmation par les composants d'automatisation, une première caractérisation ( 128 ) dans le premier message de confirmation ou dans un autre message à la suite du message de confirmation étant transmise ;
- réception de la première caractérisation ( 128 ) d'un premier dispositif ( 106 ) transpondeur par l'appareil mobile de commande et d'observation, le premier dispositif transpondeur étant mis sur l'installation technique, le premier dispositif transpondeur pouvant être activé par les composants d'automatisation et la première caractérisation ayant été déterminée par une liaison ( 126 ) de communication sans fil allant des composants d'automatisation à l'appareil mobile de commande et d'observation ;
- émission d'un deuxième message ( 146 ) au composant d'automatisation pour la confirmation de la réception du message de confirmation, le premier dispositif ( 106 ) transpondeur étant activé après la réception du deuxième message par les composants d'automatisation ;
- désactivation de la liaison de communication entre l'appareil de commande et d'observation et les composants d'automatisation ;
- envoi d'un signal ( 130 ) porteur ;
- réception du signal ( 132 ) porteur modulé par le premier dispositif transpondeur ;
- détermination d'une première distance ( 134 ) au premier dispositif transpondeur et d'une première caractérisation ( 136 ) déterminée par radio du premier transpondeur à partir du signal porteur modulé ;
- réactivation de la liaison de communication entre l'appareil de commande et d'observation et les composants d'automatisation ;
- autorisation de la commande des composants d'automatisation par l'appareil mobile de commande et d'observation, si la première distance est plus petite qu'une première distance ( 138 ) prescrite et si la première caractérisation ( 136 ) déterminée par radio correspond à la première caractérisation ( 128 ).

12. Appareil de commande et d'observation suivant la revendication 11, comprenant en outre des moyens de production du signal porteur de manière à ce que le signal ( 400 ) porteur ait une première séquence ( 42 ) et une deuxième séquence, ( 104 ) la première séquence pouvant être utilisée pour la détermination de la première distance et la deuxième séquence pouvant être utilisée pour la détermination de la première caractérisation déterminée par radio.

13. Appareil de commande et d'observation suivant la revendication 12, dans lequel une première caractérisation est codée est modulée sur la deuxième séquence par le dispositif transpondeur, l'appareil de commande et d'observation ayant des moyens de décodage de la première caractérisation codée.

14. Appareil de commande et d'observation suivant la revendication 13, dans lequel la première caractérisation codée sur le dispositif transpondeur au moyen d'un code de Golay, l'appareil de commande et d'observation ayant des moyens pour effectuer une détection de corrélation, la première caractérisation déterminée par radio pouvant être déterminée à partir de la première caractérisation codée a moyen de la détection de corrélation.

15. Appareil de commande et d'observation suivant l'une des revendications 11 à 14, comprenant en outre des moyens de production du signal porteur dans une bande de fréquence prescrite, la largeur de bande du signal modulé par le transpondeur étant sensiblement plus petite que la largeur de la bande de fréquence.

16. Système ( 100 ) HMI ayant un appareil de commande et d'observation suivant l'une des revendications 12 à 16 et un composant ( 102 ) d'automatisation d'une installation technique, le composant d'automatisation pouvant être commandé par un appareil de commande et d'observation comprenant :
- des moyens de réception d'un premier message ( 124 ) de commande et d'observation, dans lequel il est demandé au moyen du premier message que le composant d'automatisation soit commandé, le premier message ayant été transmis par une liaison ( 126 ) de communication sans fil de l'appareil de commande et d'observation au composant d'automatisation ;
- des moyens de transmission d'une première caractérisation ( 128 ) d'un premier dispositif ( 106 ) transpondeur à l'appareil de commande et d'observation, le dispositif transpondeur étant mis sur l'installation technique et étant conformé de manière à répondre après activation à un signal porteur de l'appareil ( 104 ) de commande et d'observation ;
- des moyens d'activation du premier dispositif transpondeur les moyens étant conformés de manière à activer le premier dispositif transpondeur après transmission de la caractérisation ;
- des moyens de désactivation de la liaison de communication sans fil ;
- des moyens de réactivation de la liaison de communication sans fil après écoulement d'une durée prescrite ;
- des moyens de désactivation du premier dispositif transpondeur ;
- autorisation de la commande du composant d'automatisation si un signal ( 148 ) d'autorisation est reçu par l'appareil de commande et d'observation.
